# EUROPEAN PATENT APPLICATION

(11) **EP 4 640 362 A1**
(43) Date of publication of application: **29.10.2025**
(21) Application number: 23906151.8
(22) Date of filing: 20.10.2023
(51) Int. Cl.: B23K 26/24

(54) **PIECE-HOLDING DEVICE FOR CONTINUOUS LASER WELDING**

(30) Priority: 20.12.2022 ES 202231080
(71) Applicant: Sanchez Facerías, Tomás, 50016 Zaragoza (ES)
(72) Inventor: Sanchez Facerías, Tomás, 50016 Zaragoza (ES)
(74) Representative: Herrero & Asociados, S.L.
(86) International application number: PCT/ES2023/070619
(87) International publication number: WO 2024/133986

(57) **Abstract**

Clamping device (1) for parts (20) in continuous laser welding, comprising:
- Two pressing rollers (2) arranged on the upper side of the welding seam, each in contact with one of the parts (20) to be welded,
- One opposing support wheel (3), located on the underside of the welding seam and opposite to the pressing rollers (2), having a width equal to or greater than that covered by the pressing rollers (2); the support wheel (3) comprising three sub-wheels mounted on the same axis, with two outer sub-wheels (3a) of the same diameter and a central sub-wheel (3b) of smaller diameter.

## Description

### OBJECT OF THE INVENTION

The present invention relates to a clamping device for parts in continuous laser welding, usable in continuous laser welding lines.

### BACKGROUND OF THE INVENTION

Current laser welding technology is a legacy of the era when welding was performed using electric arc and electrode. The size of the heat-affected zone was significant, and consequently, the resulting deformations were large. This required extremely rigid clamping of the parts to limit deformation, which implied the use of support and clamping large and rigid structures.

By contrast, laser welding concentrates the light energy into a very small spot with a very high energy density, easily reaching the necessary temperatures to melt steel and achieve the joint. Consequently, the area affected by the temperature increase is very small, and so are the material deformations.

The evolution of older machines led to replacing the electrodes and electric arc with laser welding. Initially, the support structure used for arc welding was maintained, without considering that such structure was no longer necessary due to the minimal heat-affected zone and reduced deformations.

Additionally, economic or marketing considerations have also hindered the reduction of the size of this machinery.

### DESCRIPTION OF THE INVENTION

The clamping device for parts in continuous laser welding according to the invention comprises:
- Two pressing rollers arranged on the upper side of the welding line (the side where the laser welding head is located), each in contact with one of the parts to be welded,
- An opposing support wheel, located on the underside of the welding line and positioned opposite to the pressing rollers, having a width equal to or greater than that spanned by the pressing rollers. Said support wheel comprises three sub-wheels mounted on the same axis (i.e., mechanically joined, driven by a single gear motor), with two outer sub-wheels of the same diameter and a central sub-wheel of smaller diameter.

This arrangement minimizes the necessary supporting structure for butt-welding plates, allowing use with pieces of the same or different thicknesses. It ensures alignment of the bottom surfaces of both plates while allowing sufficient freedom on the top to absorb any thickness differences, if present.

Moreover, the use of the support wheel in the configuration of the invention on the underside of the welding zone provides the following advantages:
- The space between the two outer sub-wheels allows that, if the laser beam exceeds the plates in process, it discharges its energy on the central sub-wheel, which can be made of a more thermally conductive material and may be cooled via the axis or another means.
- The two outer sub-wheels, having the same diameter and being mechanically joined, provide a uniform support line for both plates to be welded, resulting in a single plane at the underside of the welding seam.
- If there is a thickness difference between plates, it remains on the upper side, allowing the laser to partially act on the thicker plate or to add filler material to smooth the joint if needed.

### BRIEF DESCRIPTION OF THE DRAWINGS

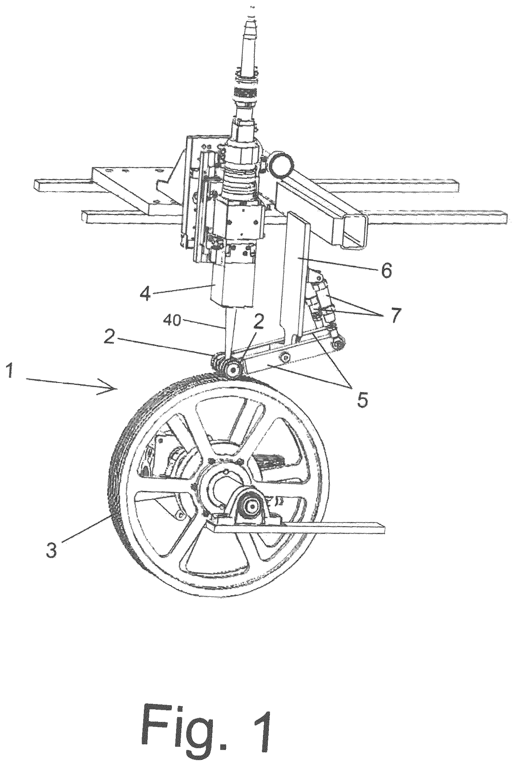

- Figure 1 shows a detailed view of the device of the invention.

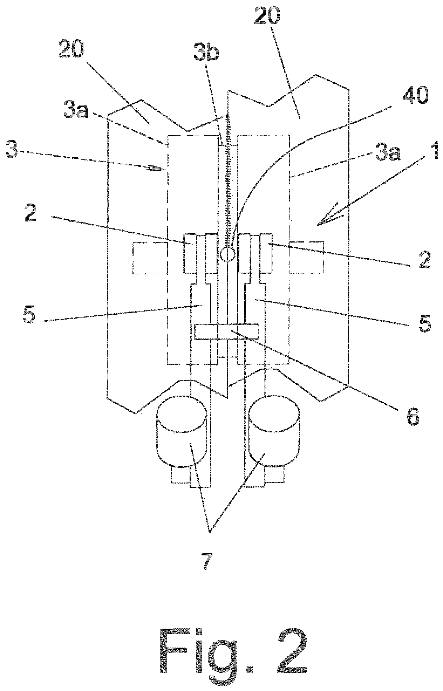

- Figure 2 shows a top view of the device of the invention.

### PRACTICAL EMBODIMENT OF THE INVENTION

The clamping device (1) for parts (20) in continuous laser welding according to the invention comprises:
- Two pressing rollers (2) arranged on the upper side of the welding seam, each in contact with one of the parts (20) to be welded, and
- One opposing support wheel (3), located on the underside of the welding and opposite to the pressing rollers (2), having a width equal to or greater than that covered by the pressing rollers (2). Said support wheel (3) comprises three sub-wheels mounted on the same axis, with two outer sub-wheels (3a) of the same diameter and a central sub-wheel (3b) of smaller diameter.

Preferably, the pressing rollers have a diameter as small as possible, at most 1/3 that of the support wheel (3), offering the following advantages:
- The rollers exert pressure on the plates to be welded at very close points, which improves clamping of the plates.
- Sufficient separation is achieved above the pressing rollers for the laser beam (40) to pass without interference, while still maintaining effective clamping.

The laser welding head (4) is located above the gap between the pressing rollers (2), allowing optimal access to the welding zone.

Additionally, the pressing rollers (2) are mounted on arms (5) articulated to a fixed support (6) and equipped with pressure adjustment elements against the support wheel. This allows for adaptation to thickness variations and maintains the coplanar lower position of the parts (20). These pressure adjustment elements preferably comprise pneumatic cylinders (7) whose pressure can be adjusted as required.

Also, it is preferred that the sub-wheels (3a, 3b) have grooved peripheral faces to minimize contact with the material in process, thereby reducing material build up on the wheels.

In this application example, the device is installed on a continuous welding line for metal plates, not shown.

Having sufficiently described the nature of the invention and its practical implementation, it should be noted that the aforementioned arrangements and those shown in the attached drawings are subject to detail modifications as long as they do not alter the fundamental principle.

## Claims

1. Clamping device (1) for parts (20) in continuous laser welding, **characterized by** comprising:
- Two pressing rollers (2) arranged on the upper side of the welding seam, each in contact with one of the parts (20) to be welded,
- One opposing support wheel (3), located on the underside of the welding seam and opposite to the pressing rollers (2), having a width equal to or greater than that covered by the pressing rollers (2); the support wheel (3) comprising three sub-wheels mounted on the same axis, with two outer sub-wheels (3a) of the same diameter and a central sub-wheel (3b) of smaller diameter.

2. Clamping device according to claim 1, wherein the pressing rollers have a maximum diameter of 1/3 that of the support wheel.

3. Clamping device according to any of the preceding claims, wherein the laser welding head (4) is positioned above the gap between the pressing rollers (2).

4. Clamping device according to any of the preceding claims, wherein the pressing rollers (2) are mounted on arms (5) articulated to a fixed support (6) and provided with pressure adjustment elements against the support wheel (3).

5. Clamping device according to claim 4, wherein the pressure adjustment elements against the support wheel comprise pneumatic cylinders (7).

6. Clamping device according to any of the preceding claims, wherein the device is mounted on a continuous welding line for metal plates.

7. Clamping device according to any of the preceding claims, wherein the sub-wheels (3a, 3b) have grooved peripheral surfaces.
